# EUROPEAN PATENT APPLICATION

(11) **EP 3 043 333 A1**
(43) Date of publication of application: **13.07.2016**
(21) Application number: 15200004.8
(22) Date of filing: 15.12.2015
(51) Int. Cl.: G09B 5/12

(54) **DIGITAL EDUCATION PLATFORM**

(30) Priority: 12.01.2015 BE 201505015
(71) Applicant: Plantyn nv, 2800 Mechelen (BE)
(72) Inventor: MACHIELS, Murielle, 2800 Mechelen (BE)
(74) Representative: De Clercq, Ann G. Y.

(57) **Abstract**

This invention relates to a method for the efficient support of teaching staff in their educational work. This invention similarly relates to a method for reducing the workload of teaching staff. This invention similarly relates to the efficient support of students in their educational process. This invention similarly relates to a method for the efficient distribution of teaching material. This invention similarly relates to a method for the efficient assessment of the quality of teaching material.

## Description

### TECHNICAL FIELD

This invention relates to a method for the efficient support of teaching staff in their educational work. This invention similarly relates to a method for reducing the workload of teaching staff. This invention similarly relates to the efficient support of students in their educational process. This invention similarly relates to a method for the efficient distribution of teaching material. This invention similarly relates to a method for the efficient assessment of the quality of teaching material.

### TECHNOLOGICAL BACKGROUND TO THE INVENTION

In many countries and regions, education is undergoing a transition towards individual student support. Specifically, this means that lesson content and teaching methods are increasingly geared towards the needs of the individual student. This stands in stark contrast to conventional teaching methods, wherein lesson content and teaching methods are aimed primarily at a class as a whole.

The transition to more individual student support in education goes hand-in-hand with the emergence of inclusive education. In inclusive education, children with special needs are included in class groups in the mainstream education system whenever this is deemed to be best for the child. Inclusive forms of education are an alternative and a supplement to conventional special needs education

Both the emergence of individual student support and the emergence of inclusive education are necessarily associated with individualised lesson preparations, individualised teaching material, and individualised reporting on the learning process of students. This requires time, effort and resources that are scarce in education.

The emergence of the aforementioned modern forms of education goes hand-in-hand with the digitisation of society. There is also a clear transition towards digital education; whereas conventional lessons were given primarily using chalk and a blackboard, in modern forms of education increasing use is made of electronic teaching methods. However, digital education is still in its infancy and its development is in full swing, as a result of which a lot of new educational material and associated lesson preparations must be produced. However, this is not easy, given the high workload of teachers and the scant resources of education.

The present invention provides a solution to the above challenges.

### SUMMARY

In one aspect, the present invention comprises a method for personalised teaching which comprises the following steps:
a. retrieving teaching material and associated teaching objectives via a digital education platform; and,
b. preparing one or more lessons via the digital education platform using the teaching material and the associated teaching objectives.

In a following aspect, the present invention comprises a method for personalised teaching which comprises the following steps:
c. preparing new teaching material for one or more lessons and associating it with one or more teaching objectives;
d. forwarding the new teaching material and the teaching objectives associated herewith via a digital education platform to a central server (100); and,
e. optionally, retrieving the new teaching material again, if required.

In a following aspect, the present invention comprises a method for personalised teaching which comprises the following steps:
A. receiving a request to send teaching material and teaching objectives associated herewith to a teacher (210);
B. retrieving requested teaching material and the teaching objectives associated herewith from a memory (140); and,
C. sending the requested teaching material and the associated teaching objectives to an input/output element (230) of a computer (200) of the teacher (210).

In a following aspect, the present invention comprises a method for personalised teaching which comprises the following steps:
D. receiving a timetable for the planning of individual lessons and receiving the teaching objectives associated with the individual lessons;
wherein the timetable and the teaching objectives from point D are despatched by a teacher; and wherein the method then comprises the following steps:
F. preparing one or more annual plans and/or up-to-date annual progress plans on the basis of the timetable and the teaching objectives; and,
G. sending the one or more annual plans and/or up-to-date annual progress plans to the teaching staff member.

In a following aspect, the present invention comprises a method for archiving teaching material which comprises the following steps:
- receiving teaching material and the teaching objectives associated herewith from an author (310);
- storing the teaching material and the teaching objectives associated herewith in a memory (140).

In a following aspect, the present invention comprises a method for teaching on an individual basis which comprises the following steps:
- retrieval of individualised teaching material by a student (410) via a digital education platform, wherein the teaching material is made available by a teacher (210), via the digital education platform, to the student (410); and,
- processing the individualised teaching material.

In a following aspect, the present invention comprises a method for distributing teaching material which comprises the following steps:
i. providing a computer network which comprises one or more computer-readable media, and which is configured to carry out a method according to one of Claims 1 to 27; and,
ii. selecting prospective professional authors by means of the computer network.

In a following aspect, the present invention comprises teaching material configured for use in one or more of the methods described above.

In a following aspect, the present invention comprises a computer network which comprises one or more computer-readable media, and which is suitable for use in one or more of the methods described above.

In a following aspect, the present invention comprises a computer program or computer program product which is directly loadable into the internal memory of a computer or a computer program product stored on a computer-readable medium, or a combination of such computer programs or computer program products, configured for use in one or more of the methods described above.

In a following aspect, the present invention comprises a computer server (100) with a processor and memory configured for use in one or more of the methods described above.

In a following aspect, the present invention comprises a desktop, laptop, tablet, phablet and/or smartphone configured for use in a method according to one or more of the methods described above.

### DESCRIPTION OF THE FIGURES

Figure 1 shows a system (001) for the implementation of a method according to the present invention.
**Figure 2** shows a graphical presentation included in a method according to the present invention with which teaching resources and teaching plan objectives can be associated with specific lessons in a series of lessons.

### DETAILED DESCRIPTION

The singular forms "a", "the" as used below in this text comprise both the singular and plural form unless the context clearly indicates otherwise.

The terms "comprise", "comprises" as used below are synonymous with "including", "include" or "contain", "contains" and are inclusive or open and do not exclude additional, unspecified components, elements or method steps. The terms "comprise", "comprises" include the term "contain".

The listing of numerical values using number ranges comprises all values and fractions in these ranges, as well as the cited end points.

The term "approximately" as used when reference is made to a measurable value such as a parameter, a quantity, a time period, etc., is intended to include +/-10% or less, preferably +/-5% or less, more preferably +/-1% or less, and even more preferably +/-0.1 % or less, of and as from the specified value, insofar as the variations are applicable for operation in the disclosed invention. It must be understood that the value to which the term "approximately" refers has itself also been disclosed.

All documents cited in the present specification are included completely herein by way of reference.

Unless otherwise defined, all terms disclosed in the invention, including technical and scientific terms, have the meaning as a person skilled in the art normally understands them. As a further guideline, definitions are included for further explanation of terms which are used in the description of the invention.

In one specific embodiment, a method according to the present invention comprises a digital education environment by means of which teachers can obtain, for example, lesson preparations in an efficient manner which can be associated with a specific lesson, with a specific series of lessons, or with a specific teaching objective. In this way, the workload for the teaching staff is reduced and they have more time for their students, thereby increasing the quality of the education. In addition, this also benefits the quality of life of the teachers.

In a digital education environment of this type according to the present invention, teachers can also adapt lesson content themselves, or can upload new study material and new lesson preparations. This new teaching material can then be linked to specific teaching objectives. This teaching material is thus securely archived and teachers can easily reuse the lesson preparations at a later time. Teachers can also choose to share the lesson content with other teachers. In this way, teaching material can be efficiently reused, and teachers have access to teaching material that is continuously updated. In modern society, this is important since teaching methods and the state of the art are evolving continuously.

The operator of the digital learning environment, for example a publisher of teaching materials, can scan the activity of teaching staff in order to recruit potential authors. Potential authors may, for example, be recruited on the basis of their activity; the most active authors are selected as the most promising and, for example, are invited to a non-binding job interview. Alternatively, a peer review system can be implemented for selecting the best authors. The peer review system may, for example, be a digital button with which teachers can indicate whether they like or dislike specific educational material. Alternatively, in the peer review system, teachers can be given the facility to award a numerical value in a range to new or adapted teaching material; this may, for example, be a score between zero and five.

The term "teaching objectives" is understood to mean the specific objectives that are set by a public authority for students of a specific age, in a specific discipline. Alternatively, the term "teaching objectives" can also refer to skills and/or knowledge that students of a specific age and in a specific discipline do not strictly necessarily have to master, but for which an educational establishment must nevertheless make every effort to ensure that teaching objectives of this type are taught to students.

An education environment according to the present invention similarly enables the linking of lesson preparations and associated teaching objectives to a schedule. The schedule comprises a timetable which clearly sets out the teaching objectives that must be achieved at a specific time for a specific class group, or for a specific student. These teaching objectives can be compared automatically in the digital education environment with an annual plan. In this way, a teacher can effectively check whether a specific schedule is adequate for meeting the requirements of a teaching plan. In addition, the content of given lessons can be compared during a school year with predefined teaching objectives. It is thus easy to track the progress of a class group or of an individual student efficiently and thoroughly, and make adjustments if necessary.

Aspect 1. In a first aspect, the present invention comprises a method for personalised teaching which comprises the following steps:
a. retrieving teaching material and associated teaching objectives via a digital education platform; and,
b. preparing one or more lessons via the digital education platform using teaching material and the associated teaching objectives.

Lessons can be prepared efficiently in this way. The lessons can additionally be individualised according to the needs of specific students or groups of students, thus benefiting educational diversification. Educational diversification has always been important for ensuring that as many students as possible keep up with the lesson, but at the same time being able to stretch strong students. Diversification becomes even more important with the emergence of inclusive education. If special needs students are included in a class group within mainstream education, their specific learning needs must be met. The provision of specific teaching resources in order to accommodate specific learning needs, for example the provision of text-to-speech technology for blind students, dyslexic children, children speaking other languages and/or children with concentration disorders, would, however, be superfluous for children not included in these categories.

The term "teaching material" is understood to mean any type of material that can be used to give a lesson, for example textbooks, workbooks, audiovisual material, assignments, tests, and/or digital exercises. The term "teaching material" similarly includes lesson preparations which a student does not directly see, but which are nevertheless used by a teacher as a guideline for a lesson.

The term "lesson" is understood to mean a coherent, structured time unit which is designed and provided for the transfer of knowledge between a teacher and one or more students. During a lesson, teaching material is used to convey knowledge and to achieve one or more teaching objectives. The term "teaching objective" is understood to mean that which education seeks to achieve. The term "teaching objective" comprises the terms "attainment target" and "lesson objective". The term "attainment target" is understood to mean knowledge or a skill that a student must master at the end of a school year. The term "lesson objective" is understood to mean knowledge or skill that a student must master at the end of a lesson.

The term "teaching staff member" is understood to mean someone who may be both a teacher and an author. The term "teacher" is understood to mean someone who gives lessons to one or more students. The term "author" is understood to mean someone who produces new teaching material or adapts existing teaching material.

The term "digital education platform" is understood to mean education technology, wherein education is facilitated by means of digital technology. It is a platform where teaching staff can download, adapt, upload and/or share educational material.

A digital education platform according to the first aspect of the present invention can also be used for the official reporting to a regulatory authority, which substantially reduces the administrative load of teaching staff.

The term "teaching plan" is understood to mean a description of the attainment targets that students of a specific age must achieve for a specific subject.

Aspect 2. In a second aspect, the present invention comprises the method according to aspect 1, wherein step a is followed by the steps:
aa. adapting teaching material according to the specific needs of a specific class, student, group of students, region and/or discipline, hereby creating adapted teaching material and adapted lessons;
ab. associating adapted teaching objectives with the adapted lessons, hereby creating adapted associated teaching objectives; and,
ac. storing the adapted teaching material and the adapted associated teaching objectives via the digital education platform on a central server (100).

If a teaching staff member finds, for example, that a specific subject is poorly covered in the teaching material that is offered in a digital education platform according to the present invention, a teaching staff member can adapt this. In this way, the specific needs of the students for which the teaching staff member is responsible can be better met.

Aspect 3. In a third aspect, the present invention comprises the method according to one of aspects 1 to 2, in which step ac is followed by the step:
ad. making the adapted teaching material and the adapted associated teaching objectives available via the digital education platform.

In this way, the teaching staff member can efficiently share the adapted teaching material with his or her colleagues. In this way, work duplication is avoided and the efficiency of the education system is increased.

The adapted teaching material can be subjected to a peer review system in order to assess the quality of the adapted teaching material. The peer review system may, for example, be a digital button with which teaching staff can indicate whether they like or dislike specific educational material. Alternatively, the peer review system may entail the allocation of a specific value in a numerical range; for example, a specific score between zero and five. In this way, teaching staff can efficiently assess the quality of adapted teaching material.

Aspect 4. In a further aspect, the present invention comprises a method for personalised teaching which comprises the following steps:
c. preparing new teaching material for one or more lessons and associating it with one or more teaching objectives;
d. forwarding the new teaching material and the teaching objectives associated herewith via a digital education platform to a central server (100); and,
e. optionally retrieving the new teaching material again, if required.

In some cases, specific topics which are not available in the digital education environment need to be taught to a class group. This may, for example, be in the light of very recent events. There may therefore be a need to produce new teaching material. By means of a method according to the fourth aspect of the present invention, the new teaching material is efficiently archived. Through the association of new teaching objectives with the new teaching material it can furthermore easily be retrieved if the teaching material might be useful in the context of these teaching objectives.

The same teaching staff member can retrieve specific teaching materials without adapting them, can retrieve other materials and then adapt them and/or produce new teaching material and possibly upload it into the digital education environment. In this sense, a teaching staff member can act both in a pure teaching role and in a role of author.

Aspect 5. In a further aspect, the present invention comprises a method according to one of aspects 1 to 4 in which step d or e is followed by the step:
f. making the new teaching material and the teaching objectives associated herewith available via the digital education platform.

If teaching staff can easily share their lesson content with their colleagues, the education process can generally respond more effectively to current circumstances.

The new teaching material can be subjected to a peer review system in order to assess the quality of the adapted teaching material. The peer review system may, for example, be a digital button with which teaching staff can indicate whether they like or dislike specific educational material. Alternatively, the peer review system may entail the allocation of a specific value in a numerical range; for example, a specific score between zero and five. In this way, teaching staff can efficiently assess the quality of adapted teaching material.

Aspect 6. In a further aspect, the present invention comprises the method according to one of aspects 1 to 5 in which the last step is followed by the step:
g. preparing a schedule comprising a timetable on the basis of teaching material and the teaching objectives associated herewith.

In this way, a schedule can be efficiently prepared.

Aspect 7. In a further aspect, the present invention comprises the method according to one of aspects 1 to 6 in which step g is followed by the step:
h. retrieving one or more annual plans and/or up-to-date annual progress plans which have been prepared using a database, contained in a central server (100), on the basis of the schedule and on the basis of specified associations between the teaching material, the timetable and the teaching objectives.

This enables an efficient tracking of individual students and/or class groups. Furthermore, a method according to the seventh aspect of the present invention significantly simplifies the official reporting of a teaching staff member. In this way, the administrative load of teaching staff is reduced. This is an important effect, since an excessive workload causes significant stress among many teaching staff members.

Aspect 8. In a further aspect, the present invention comprises the method according to one of aspects 1 to 7, wherein the last step is followed by the step:
i. tracking the progress of one or more students or groups of students via the digital education platform.

The use of a digital education environment for tracking students or groups of students results in a high efficiency in comparison with the use of pen and paper. Furthermore, the use of a digital education environment is more eco-friendly.

If a method according to aspect 6 is used in combination with aspect 8, the tracking of individual students or groups of students is further simplified by means of a digital schedule.

If a method according to aspect 7 is used in combination with aspect 8, the tracking of individual students is further simplified through the use of annual progress plans.

Aspect 9. In a further aspect, the present invention comprises the method according to one of aspects 1 to 8, wherein step i is followed by the step:
j. adapting teaching material and lessons on the basis of the progress of individual students or groups of students, hereby creating individualised lesson content.

This ensures optimum, individualised support for each student and/or each group of students.

Aspect 10. In a further aspect, the present invention comprises the method according to one of aspects 1 to 9, wherein step j is followed by the step:
k. offering the individualised lesson content to the students or groups of students via the digital education platform.

The current digital education environment is highly suited to the offering of individualised lesson content to students and/or groups of students. Furthermore, this enables the avoidance of links to external education environments, thus increasing ease of use.

11. In a further aspect, the present invention comprises the method according to one of aspects 1 to 10, wherein the method furthermore comprises the following steps:
- tracking the homework load of one or more students using the digital education platform; and,
- on the basis of the homework load of the one or more students, making a choice from the following options: 1) setting homework for the one or more students, and 2) not setting homework for the one or more students.

In this way, the homework load of one or more students can be efficiently tracked. This reduces the administrative load of a teaching staff member, thus enabling a better spread of the homework of students.

Aspect 12. In a further aspect, the present invention comprises the method for personalised teaching which comprises the following steps:
A. receiving a request to send teaching material and teaching objectives associated herewith to a teacher (210);
B. retrieving the requested teaching material and the teaching objectives associated herewith from a memory (140); and,
C. sending the requested teaching material and the associated teaching objectives to an input/output element (230) of a computer (200) of the teacher (210).

Lessons can be efficiently prepared in this way.

In addition, the lessons can be tailored to the needs of specific students or groups of students, which benefits the diversification of education. Educational diversification has always been important for ensuring that as many students as possible keep up with the lesson, but at the same time being able to stretch strong students. Diversification becomes even more important with the emergence of inclusive education. If special needs students are included in a class group within mainstream education, their specific learning needs must be met. Specific learning needs of this type, for example the provision of text-to-speech technology for blind students, would, however, be superfluous for sighted students.

Aspect 13. In a further aspect, the present invention comprises the method according to one of aspects 1 to 12, wherein step C is followed by the steps:
D. receiving a schedule comprising one or more elements from the following list: lesson times, lesson content, class composition, educational discipline, educational network and educational form;
E. retrieving one or more teaching plans associated with a class group and/or a subject from the memory (140);
F. comparing the teaching objectives covered in the lessons with one or more teaching plans;
G. preparing one or more annual plans and/or up-to-date annual progress plans on the basis of a timetable, and on the basis of the relationships between the teaching material, the timetable and the teaching objectives; and,
H. sending these one or more annual plans and/or up-to-date annual progress plans to an input/output element (230) of a computer (200) of the teacher (210).

In this way, the preparation of annual plans and/or up-to-date annual progress plans is efficiently facilitated for a teacher.

The term "educational network" makes the distinction between subsidised publicly run education, community education and subsidised privately run education, as practised in Flanders.

The term "educational form" is understood to mean a method for knowledge transfer, wherein a distinction can be made between lectures, tutorials and practical lessons.

Aspect 14. In a further aspect, the present invention comprises the method according to one of aspects 1 to 13, wherein step C is followed by the following steps:
CA. receiving adapted lessons and/or adapted teaching material, together with the teaching objectives which have been adapted hereto; and,
CB. storing the adapted lessons and/or the adapted teaching material, together with the adapted teaching objectives associated herewith, in the memory (140).

In this way, aspects 12 or 13 of the present invention can also be used for teaching material that has been adapted for a teaching staff member.

Aspect 15. In a further aspect, the present invention comprises the method according to one of aspects 1 to 14, wherein step CB is followed by the steps:
CC. receiving a request to provide the adapted teaching material and the teaching objectives associated herewith; and,
CD. despatching the adapted teaching material and the teaching objectives associated herewith on receiving a request for the despatch hereof.

In this way, adapted teaching material can be efficiently shared between different teaching staff members. A company that provides the digital education platform may impose an additional charge for this.

Aspect 16. In a further aspect, the present invention comprises the method for personalised teaching which comprises the following steps:
D. receiving a timetable for the planning of individual lessons and receiving teaching objectives associated with the individual lessons;
wherein the timetable and the teaching objectives from point D are despatched by a teaching staff member; and wherein the method then comprises the following steps:
F. preparing one or more annual plans and/or up-to-date annual progress plans on the basis of the timetable and the teaching objectives; and,
G. sending the one or more annual plans and/or up-to-date annual progress plans to the teaching staff member.

In this way, the reporting of annual plans and/or annual progress plans by a teaching staff member to a manager or inspector is efficiently facilitated. This reduces the administrative load of the teaching staff member. The teaching staff member thus has more time available for his or her students which benefits the quality of the education.

Aspect 17. In a further aspect, the present invention comprises the method according to one of aspects 1 to 16, comprising the steps:
- receiving data relating to the individual progress of one or more students of the teacher (210), via a computer of a student (400), or via the server of an external learning platform (500);
- storing the data in a memory (140);
and optionally comprising the steps:
- receiving a request from the teacher (210);
- retrieving the data from the memory (140);
- retrieving the teaching objectives associated with the teaching material contained in the timetable from the memory (140);
- comparing the data relating to the individual progress of one or more students with the relevant teaching objectives;
- preparing a structured report in which the progress of the one or more students is compared with the relevant teaching objectives; and,
- sending the structured report to the teacher (210).

In this way, individual students can be efficiently tracked by a teacher. In this way, a special needs function can also be allocated to specific students or groups of students so that a special needs teaching staff member or special needs person can be alerted or called in for the student or group of students.

Aspect 18. In a further aspect, the present invention comprises the method for archiving teaching material which comprises the following steps:
- receiving teaching material and the teaching objectives associated herewith from an author (310);
- storing the teaching material and the associated teaching objectives in a memory (140).

In this way, teaching material can be efficiently archived by means of a digital learning environment, in particular relevant teaching material can easily be retrieved by subsequently searching for required teaching objectives.

Aspect 19. In a further aspect, the present invention comprises the method according to one of aspects 1 to 18 which furthermore comprises the following steps:
- receiving an instruction to make the received teaching material available;
- receiving a request for the presentation of the teaching material from a teaching staff member (210); and,
- presenting the teaching material to the teaching staff member (210) who retrieved the teaching material.

In this way, teaching material can be efficiently shared. In particular, teachers can easily retrieve teaching material that is associated with specific teaching objectives. The company that provides the digital education platform may impose an additional charge for this.

Aspect 20. In a further aspect, the present invention comprises the method according to one of aspects 1 to 19, wherein the teaching material is stored in a memory (140) which is searchable by a search engine.

In this way, teaching material can easily be retrieved by the teaching staff member who might use it.

Aspect 21. In a further aspect, the present invention comprises the method for teaching on an individual basis which comprises the following steps:
- retrieval of individualised teaching material by a student (410) via a digital education platform, wherein the teaching material is made available by a teacher (210), via the digital education platform, to the student (410); and,
- processing the individualised teaching material.

This is a very efficient method for processing individualised teaching material.

Aspect 22. In a further aspect, the present invention comprises the method according to one of aspects 1 to 21, wherein the individualised teaching material comprises one or more exercises and/or tests; and wherein the method furthermore comprises the following steps:
- providing answers to the one or more exercises and/or tests contained in individualised teaching material; and,
- submitting the answers to the exercises and/or tests contained in the individualised teaching material, in the digital education platform.

In this way, answers to exercises and/or tests, for example, can be efficiently passed on to a teacher.

Aspect 23. In a further aspect, the present invention comprises the method according to one of aspects 1 to 22, wherein the method furthermore comprises the following step:
- obtaining feedback on the submitted answers.

In this way, a student can efficiently and simply obtain feedback from a teacher relating to completed exercises and/or tests.

Aspect 24. In a further aspect, the present invention comprises the method according to one of aspects 1 to 23, wherein a plurality of teaching staff members use the same central server (100).

This is an efficient use of resources.

Aspect 25. In a further aspect, the present invention comprises the method according to one of aspects 1 to 24, wherein a plurality of authors use the same central server (100).

This is an efficient use of resources.

Aspect 26. In a further aspect, the present invention comprises the method according to one of aspects 1 to 25, wherein a plurality of students use the same central server (100).

This is an efficient use of resources.

Aspect 27. The method according to one of aspects 1 to 26, wherein the central server (100) is connected to one or more external learning environments.

In this way, optimum use can be made of existing infrastructure.

In addition, a digital education platform according to this aspect of the present invention can be regarded as an open system with Internet-based services. The term "Internet-based services" is understood to mean services that are offered via the Internet. A digital education platform according to the present invention can thus be efficiently integrated within external learning platforms, for example smartschool and/or blackboard.

A teaching staff member can thus, for example, retrieve, produce and/or adapt teaching material in a digital education platform according to the present invention. The teaching staff member can upload the teaching material to the external learning environment via the connection between the digital education platform according to the present invention and an external learning environment. The exchange of teaching material between the teaching staff member and students can then take place via the external learning environment. In addition, the exchange of completed tasks, assignments and homework between the student and the teaching staff can also take place via the external learning environment.

Furthermore, in a method according to this aspect of the present invention, teaching material or teaching plans, for example, can also be uploaded via an external learning environment. A server of the external learning environment (500) can then forward the teaching material or teaching plans to the central server (100) of the digital education platform and then store them in the memory of the central server (140) of the digital education platform so that they can then be used in the digital education platform according to one of the aspects of the present invention

In these ways, a connection between the central server (100) and one or more external learning environments can be particularly advantageous. Many schools are in any event accustomed to working with a specific external learning environment such as smartschool or blackboard. In such cases, the transition to a digital education platform according to the present invention may entail a huge step. A method according to this aspect of the present invention makes this step smaller.

Aspect 28. In a further aspect, the present invention comprises the method for distributing teaching material which comprises the following steps:
i. providing a computer network which comprises one or more computer-readable media and which is configured to carry out a method according to one of aspects 1 to 27;
ii. selecting prospective professional authors by means of the computer network.

In this way, the most talented authors can be recruited from a large group of teaching staff. Teaching material which these talented authors produce can be distributed in an optimum manner via a method according to the present invention. The quality of the educational material is thus improved.

Aspect 29. In a further aspect, the present invention comprises the method according to one of aspects 1 to 28, wherein step i is followed by the step:
- i'. screening the activity of teaching staff relating to the production of teaching material;
wherein prospective professional authors are selected from among the most active teaching staff members.

The quantity of new and adapted teaching material that is produced by a teaching staff member can be a good measure of his or her talent as an author.

Aspect 30. In a further aspect, the present invention comprises the method according to one of aspects 1 to 28, wherein step i is followed by the step:
- i". providing a peer review system to test the quality of teaching material produced by a teaching staff member;
wherein prospective professional authors are selected from among the teaching staff members with the best scores.

In some contexts, a peer review system may be a better way to recruit potential authors.

Aspect 31. In a further aspect, the present invention comprises the method according to one of aspects 1 to 30, carried out with or by a computer.

This enables a highly efficient implementation of a method according to the present invention.

Aspect 32. In a further aspect, the present invention comprises teaching material configured for use in a method according to one of aspects 1 to 31.

Teaching material of this type benefits the quality of the education.

Aspect 33. In a further aspect, the present invention comprises a computer network which comprises one or more computer-readable media and which is suitable for use in a method according to one of aspects 1 to 31.

This enables a highly efficient implementation of a method according to the present invention.

Aspect 34. In a further aspect, the present invention comprises a computer program or computer program product which is directly loadable into the internal memory of a computer, or a computer program product stored on a computer-readable medium, or a combination of such computer programs or computer program products, configured for use in a method according to one of aspects 1 to 31.

This enables a highly efficient implementation of a method according to the present invention.

Aspect 35. In a further aspect, the present invention comprises a computer server (100) with a processor and memory configured for use in a method according to one of aspects 1 to 31.

This enables a highly efficient implementation of a method according to the present invention.

Aspect 36. In a further aspect, the present invention comprises a desktop, laptop, tablet, phablet and/or smartphone configured for use in a method according to one of aspects 1 to 31.

The term "desktop" is understood to mean a personal computer with a form that is adapted for use over prolonged periods at a single location.

The term "laptop" is understood to mean a personal computer with a form that is adapted for use for short or prolonged periods at different locations.

The term "tablet" is understood to mean a personal computer which comprises a touchscreen, electrical circuits, and a battery, and which is adapted to be easily portable.

The term "smartphone" is understood to mean a mobile telephone which comprises an operating system, a touch system and a broadband Internet connection.

The term "phablet" is understood to mean a portable electronic terminal device which comprises one or more features of a smartphone and one or more features of a tablet.

This enables a highly efficient implementation of a method according to the present invention.

Moreover, the carrying out of a method according to the present invention using a laptop, phablet and/or smartphone offers a further advantage: the advantage of the mobility of a user such as a teaching staff member, author, and/or student. Thus, for example, a teaching staff member can check lesson preparations at any location. An author can, for example, produce teaching material at any location, and a student can, for example, learn at any location.

The invention comprises the following numbered explanatory notes:
1. A method for personalised teaching which comprises the following steps:
   a. retrieving teaching material and associated teaching objectives via a digital education platform; and,
   b. preparing one or more lessons via the digital education platform using the teaching material and the associated teaching objectives.
2. The method according to explanatory note 1, wherein step a is followed by the steps:
   aa. adapting teaching material according to the specific needs of a specific class, student, group of students, region and/or discipline, hereby producing adapted teaching material and adapted lessons;
   ab. associating adapted teaching objectives with the adapted lessons, hereby producing adapted associated teaching objectives; and,
   ac. storing the adapted teaching material and the adapted associated teaching objectives via the digital education platform on a central server (100).
3. The method according to explanatory note 2, wherein step ac is followed by the step:
   ad. making the adapted teaching material and the adapted associated teaching objectives available via the digital education platform.
4. A method for personalised teaching which comprises the following steps:
   c. preparing new teaching material for one or more lessons and associating it with one or more teaching objectives;
   d. forwarding the new teaching material and the teaching objectives associated herewith via a digital education platform to a central server (100); and,
   e. optionally retrieving the new teaching material again, if required.
5. The method according explanatory note 4 in which step d or e is followed by the step:
   f. making the new teaching material and the teaching objectives associated herewith available via the digital education platform.
6. The method according to one of explanatory notes 1 to 5 in which the last step is followed by the step:
   g. preparing a schedule comprising a timetable on the basis of teaching material and the teaching objectives associated herewith.
7. The method according to explanatory note 6 in which step g is followed by the step:
   h. retrieving one or more annual plans and/or up-to-date annual progress plans which have been prepared using a database, contained in a central server (100), on the basis of the schedule and on the basis of specified associations between the teaching material, the timetable and the teaching objectives.
8. The method according to one of explanatory notes 1 to 7, wherein the last step is followed by the step:
   i. tracking the progress of one or more students or groups of students via the digital education platform.
9. The method according to explanatory note 8, wherein step i is followed by the step:
   j. adapting teaching material and lessons on the basis of the progress of individual students or groups of students, hereby creating individualised lesson content.
10. The method according to explanatory note 9, wherein step j is followed by the step:
   k. offering the individualised lesson content to the students or groups of students via the digital education platform.
11. The method according to one of explanatory notes 1 to 10, wherein the method furthermore comprises the following steps:
   - tracking the homework load of one or more students using the digital education platform; and,
   - on the basis of the homework load of the one or more students, making a choice from the following options: 1) setting homework for the one or more students, and 2) not setting homework for the one or more students.
12. A method for personalised teaching which comprises the following steps:
   A. receiving a request to send teaching material and teaching objectives associated herewith to a teacher (210);
   B. retrieving the requested teaching material and the teaching objectives associated herewith from a memory (140); and,
   C. sending the requested teaching material and the associated teaching objectives to an input/output element (230) of a computer (200) of the teacher (210).
13. The method according to explanatory note 12, wherein step C is followed by the steps:
   D. receiving a schedule comprising one or more elements from the following list: lesson times, lesson content, class composition, educational discipline, educational network and educational form;
   E. retrieving one or more teaching plans associated with a class group and/or a subject from the memory (140);
   F. comparing the teaching objectives covered in the lessons with one or more teaching plans;
   G. preparing one or more annual plans and/or up-to-date annual progress plans on the basis of a timetable, and on the basis of the relationships between the teaching material, the timetable and the teaching objectives; and,
   H. sending these one or more annual plans and/or up-to-date annual progress plans to an input/output element (230) of a computer (200) of the teacher (210).
14. The method according to one of explanatory notes 12 or 13, wherein step C is followed by the following steps:
   CA. receiving adapted lessons and/or adapted teaching material, together with the teaching objectives which have been adapted hereto; and,
   CB. storing the adapted lessons and/or the adapted teaching material, together with the adapted teaching objectives associated herewith, in the memory (140).
15. The method according to explanatory note 14, wherein step CB is followed by the steps:
   CC. receiving a request to provide the adapted teaching material and the teaching objectives associated herewith; and,
   CD. despatching the adapted teaching material and the teaching objectives associated herewith on receiving a request for the despatch hereof.
16. A method for personalised teaching which comprises the following steps:
   D. receiving a timetable for the planning of individual lessons and receiving teaching objectives associated with the individual lessons;
   wherein the timetable and the teaching objectives from point D are despatched by a teaching staff member; and wherein the method then comprises the following steps:
   F. preparing one or more annual plans and/or up-to-date annual progress plans on the basis of the timetable and the teaching objectives; and,
   G. sending the one or more annual plans and/or up-to-date annual progress plans to the teaching staff member.
17. The method according to one of explanatory notes 12 to 16, comprising the steps:
   - receiving data relating to the individual progress of one or more students of the teacher (210), via a computer of a student (400), or via the server of an external learning platform (500);
   - storing the data in a memory (140);
   and optionally comprising the steps:
   - receiving a request from the teacher (210);
   - retrieving the data from the memory (140);
   - retrieving the teaching objectives associated with the teaching material contained in the timetable from the memory (140);
   - comparing the data relating to the individual progress of one or more students with the relevant teaching objectives;
   - preparing a structured report in which the progress of the one or more students is compared with the relevant teaching objectives; and,
   - sending the structured report to the teacher (210).
18. A method for archiving teaching material which comprises the following steps:
   - receiving teaching material and the teaching objectives associated herewith from an author (310);
   - storing the teaching material and the associated teaching objectives in a memory (140).
19. The method according to explanatory note 18 which furthermore comprises the following steps:
   - receiving an instruction to make the received teaching material available;
   - receiving a request for the presentation of the teaching material from a teaching staff member (210); and,
   - presenting the teaching material to the teaching staff member (210) who retrieved the teaching material.
20. The method according to explanatory note 19, wherein the teaching material is stored in a memory (140) which is searchable by a search engine.
21. A method for teaching on an individual basis which comprises the following steps:
   - retrieval of individualised teaching material by a student (410) via a digital education platform, wherein the teaching material is made available by a teacher (210), via the digital education platform, to the student (410); and,
   - processing the individualised teaching material.
22. The method according to explanatory note 21, wherein the individualised teaching material comprises one or more exercises and/or tests; and wherein the method furthermore comprises the following steps:
   - providing answers to the one or more exercises and/or tests contained in individualised teaching material; and,
   - submitting the answers to the exercises and/or tests contained in the individualised teaching material, in the digital education platform.
23. The method according to explanatory note 22, wherein the method furthermore comprises the following step:
   - obtaining feedback on the submitted answers.
24. The method according to one of explanatory notes 1 to 23, wherein a plurality of teaching staff members use the same central server (100).
25. The method according to one of explanatory notes 1 to 24, wherein a plurality of authors use the same central server (100).
26. The method according to one of explanatory notes 1 to 25, wherein a plurality of students use the same central server (100).
27. The method according to one of explanatory notes 1 to 26, wherein the central server (100) is connected to one or more external learning environments.
28. A method for distributing teaching material which comprises the following steps:
   i. providing a computer network which comprises one or more computer-readable media and which is configured to carry out a method according to one of explanatory notes 1 to 27; and,
   ii. selecting prospective professional authors by means of the computer network.
29. The method according to explanatory note 28, wherein step i is followed by the step:
   - i'. screening the activity of teaching staff relating to the production of teaching material;
   wherein prospective professional authors are selected from among the most active teaching staff members.
30. The method according to explanatory note 28, wherein step i is followed by the step:
   - i". providing a peer review system to test the quality of teaching material produced by a teaching staff member;
   wherein prospective professional authors are selected from among the teaching staff members with the best scores.
31. The method according to one of explanatory notes 1 to 30, carried out with or by a computer.
32. Teaching material configured for use in a method according to one of explanatory notes 1 to 31.
33. A computer network which comprises one or more computer-readable media and which is suitable for use in a method according to one of explanatory notes 1 to 31.
34. A computer program or computer program product which is directly loadable into the internal memory of a computer, or a computer program product stored on a computer-readable medium, or a combination of such computer programs or computer program products, configured for use in a method according to one of explanatory notes 1 to 31.
35. A computer server (100) with a processor and memory configured for use in a method according to one of explanatory notes 1 to 31.
36. A desktop, laptop, tablet, phablet and/or smartphone configured for use in a method according to one of explanatory notes 1 to 31.

### EXAMPLES

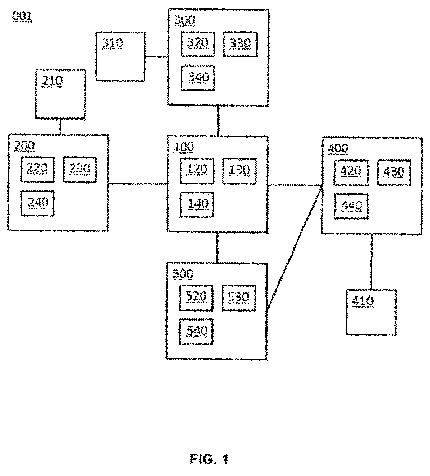

Reference is made, by way of example, to Figure 1. Figure 1 shows a schematic representation of a system (001) which comprises a central server (100), a computer of a teacher (200), a computer of an author (300), a computer of a student (400) and a server of an external learning platform (500). The central server (100) is operationally connected to said elements (200, 300, 400, 500) of the system (001). The digital education platform is managed via the central server, and teachers (200), authors (300) and students (400) can use the digital education platform via the operational connections. The computers (200, 300, 400, 500) of a teacher (210), an author (310) and a student (410) are operated by a teacher (210), an author (310) and a student (410) respectively. In this way, the teacher (210), author (310) and student (410) can use the digital education platform via their own computers (200, 300, 400). The role of teacher (210) and author (310) may be performed by the same person, for example if the teacher (210) is a teaching staff member who himself produces teaching material. In this case, the computer (200) of the teacher and the computer (300) of the author may also refer to the same entity. The computer of the student (400) is also operationally connected to the server of the external learning platform (500), and the server of the external learning platform (500) is operationally connected to the central server (100). In this way, the student (410) can efficiently use a digital education platform according to an embodiment of the present invention which is integrated with existing and known external learning platforms. The computers of the teacher (200), the author (300), and the student (400) each comprise a microprocessor (220, 320, 420), an input/output element (230, 330, 430) and a memory (240, 340, 440). The central server (100) and the server of the external learning platform (500) each comprise a microprocessor (120, 520), an input/output element (130, 530) and a memory (140, 540). It should be noted that a plurality of central servers (100), a plurality of teachers (200), a plurality of authors (300), a plurality of students (400) and a plurality of servers of external learning platforms (500) may exist, which are not explicitly shown in the system (001) for the sake of clarity.

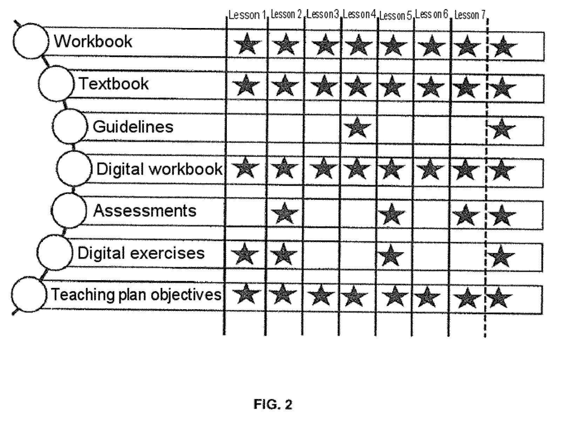

Reference is made, by way of a further example, to Figure 2. Figure 2 shows a method according to the present invention for efficiently indicating to a teaching staff member which teaching resources are available for different teaching plan objectives. The term "teaching plan objectives" is used here as a synonym for the term "teaching objectives". In a digital education platform according to the present invention, all teaching material that is necessary for one lesson, or for one chapter, including related teaching plan objectives and attainment targets, is collected. In a method according to this example, different teaching materials are listed in a graphical presentation in a vertical manner: workbook, textbook, guidelines, digital workbook, assessments and digital exercises. Different teaching plan objectives are listed at the bottom of the list. All types of teaching material and each teaching plan objective is associated visually with a horizontal bar. The different lessons from a series of lessons are listed next to one another at the top of the graphical presentation. A vertical bar is associated with each lesson. The intersection of vertical bars associated with lessons and the horizontal bars associated with teaching resources and teaching plan objectives define a location associated with a specific lesson and with a specific teaching resource or teaching plan objective. At these locations, a star-shaped symbol is used to indicate whether a specific type of teaching material is available for a specific lesson, and whether the specific lesson relates to a specific teaching plan objective. More specifically, the availability of a specific teaching resource for a specific lesson is indicated by means of the presence of a star-shaped symbol, and the unavailability of a specific teaching resource for specific lesson is indicated by means of the absence of a star-shaped symbol. Whether a lesson relates to a specific teaching plan objective is indicated in a similar manner. Finally, the graphical presentation comprises a column, positioned on the right side of the graphical presentation, in which it is indicated whether a specific teaching resource or a specific teaching plan objective features in one of the lessons included in the series of lessons.

## Claims

1. Method for personalised teaching which comprises the following steps:
a. retrieving teaching material and associated teaching objectives via a digital education platform; and,
b. preparing one or more lessons via the digital education platform using the teaching material and the associated teaching objectives.
optionally wherein step a is followed by the steps:
aa. adapting teaching material according to the specific needs of a specific class, student, group of students, region and/or discipline, hereby producing adapted teaching material and adapted lessons;
ab. associating adapted teaching objectives with the adapted lessons, hereby producing adapted associated teaching objectives; and,
ac. storing the adapted teaching material and the adapted associated teaching objectives via the digital education platform on a central server (100).
optionally wherein step ac is followed by the steps:
ad. making the adapted teaching material and the adapted associated teaching objectives available via the digital education platform.

2. Method for personalised teaching which comprises the following steps:
c. preparing new teaching material for one or more lessons and associating it with one or more teaching objectives;
d. forwarding the new teaching material and the teaching objectives associated herewith via a digital education platform to a central server (100); and,
e. optionally retrieving the new teaching material again, if required.
optionally wherein step d or e is followed by the step:
f. making the new teaching material and the teaching objectives associated herewith available via the digital education platform.

3. Method according to one of Claims 1 or 2, in which the last step is followed by the step:
g. preparing a schedule comprising a timetable on the basis of teaching material and the teaching objectives associated herewith.
optionally wherein step g is followed by the steps:
h. retrieving one or more annual plans and/or up-to-date annual progress plans which have been prepared using a database, contained in a central server (100), on the basis of the schedule and on the basis of specified associations between the teaching material, the timetable and the teaching objectives.

4. Method according to one of Claims 1 to 3, wherein the last step is followed by the step:
i. tracking the progress of one or more students or groups of students via the digital education platform.
optionally wherein step i is followed by the steps:
j. adapting teaching material and lessons on the basis of the progress of individual students or groups of students, hereby creating individualised lesson content.
optionally wherein step j is followed by the steps:
k. offering the individualised lesson content to the students or groups of students via the digital education platform.

5. Method according to one of Claims 1 to 4, wherein the method furthermore comprises the following steps:
- tracking the homework load of one or more students using the digital education platform; and,
- on the basis of the homework load of the one or more students, making a choice from the following options: 1) setting homework for the one or more students, and 2) not setting homework for the one or more students.

6. Method for personalised teaching which comprises the following steps:
A. receiving a request to send teaching material and teaching objectives associated herewith to a teacher (210);
B. retrieving the requested teaching material and the teaching objectives associated herewith from a memory (140); and,
C. sending the requested teaching material and the associated teaching objectives to an input/output element (230) of a computer (200) of the teacher (210).
optionally wherein step C is followed by the steps:
D. receiving a schedule comprising one or more elements from the following list: lesson times, lesson content, class composition, educational discipline, educational network and educational form;
E. retrieving one or more teaching plans associated with a class group and/or a subject from the memory (140);
F. comparing the teaching objectives covered in the lessons with one or more teaching plans;
G. preparing one or more annual plans and/or up-to-date annual progress plans on the basis of a timetable, and on the basis of the relationships between the teaching material, the timetable and the teaching objectives; and,
H. sending these one or more annual plans and/or up-to-date annual progress plans to an input/output element (230) of a computer (200) of the teacher (210).

7. Method according to Claim 6, wherein step C is followed by the following steps:
CA. receiving adapted lessons and/or adapted teaching material, together with the teaching objectives which have been adapted hereto; and,
CB. storing the adapted lessons and/or the adapted teaching material, together with the adapted teaching objectives associated herewith, in the memory (140).
optionally wherein step CB is followed by the steps:
CC. receiving a request to provide the adapted teaching material and the teaching objectives associated herewith; and,
CD. despatching the adapted teaching material and the teaching objectives associated herewith on receiving a request for the despatch hereof.

8. Method for personalised teaching which comprises the following steps:
D. receiving a timetable for the planning of individual lessons and receiving teaching objectives associated with the individual lessons;
wherein the timetable and the teaching objectives from point D are despatched by a teaching staff member; and wherein the method then comprises the following steps:
F. preparing one or more annual plans and/or up-to-date annual progress plans on the basis of the timetable and the teaching objectives; and,
G. sending the one or more annual plans and/or up-to-date annual progress plans to the teaching staff member.
optionally comprising the steps:
- receiving data relating to the individual progress of one or more students of the teacher (210), via a computer of a student (400), or via the server of an external learning platform (500);
- storing the data in a memory (140);
and optionally comprising the steps:
- receiving a request from the teacher (210);
- retrieving the data from the memory (140);
- retrieving the teaching objectives associated with the teaching material contained in the timetable from the memory (140);
- comparing the data relating to the individual progress of one or more students with the relevant teaching objectives;
- preparing a structured report in which the progress of the one or more students is compared with the relevant teaching objectives; and,
- sending the structured report to the teacher (210).

9. Method for archiving teaching material which comprises the following steps:
- receiving teaching material and the teaching objectives associated herewith from an author (310);
- storing the teaching material and the associated teaching objectives in a memory (140).

10. Method according to Claim 9 which furthermore comprises the following steps:
- receiving an instruction to make the received teaching material available;
- receiving a request for the presentation of the teaching material from a teaching staff member (210); and,
- presenting the teaching material to the teaching staff member (210) who retrieved the teaching material.
preferably wherein the teaching material is stored in a memory (140) which is searchable by a search engine.

11. Method for teaching on an individual basis which comprises the following steps:
- retrieval of individualised teaching material by a student (410) via a digital education platform, wherein the teaching material is made available by a teacher (210), via the digital education platform, to the student (410); and,
- processing the individualised teaching material.

12. Method according to Claim 11, wherein the individualised teaching material comprises one or more exercises and/or tests; and wherein the method furthermore comprises the following steps:
- providing answers to the one or more exercises and/or tests contained in individualised teaching material; and,
- submitting the answers to the exercises and/or tests contained in the individualised teaching material, in the digital education platform.
optionally wherein the method furthermore comprises the following step:
- obtaining feedback on the submitted answers;
preferably wherein a plurality of teaching staff members use the same central server (100);
preferably wherein a plurality of authors use the same central server (100);
preferably wherein a plurality of students use the same central server (100); and,
preferably wherein the central server (100) is connected to one or more external learning environments.

13. Method for distributing teaching material which comprises the following steps:
i. providing a computer network which comprises one or more computer-readable media and which is configured to carry out a method according to one of Claims 1 to 12; and,
ii. selecting prospective professional authors by means of the computer network.
optionally wherein step i is followed by the step:
- i'. screening the activity of teaching staff relating to the production of teaching material;
wherein prospective professional authors are selected from among the most active teaching staff members; and,
optionally wherein step i is followed by the step:
- i". providing a peer review system to test the quality of teaching material produced by a teaching staff member;
wherein prospective professional authors are selected from among the teaching staff members with the best scores.

14. Teaching material configured for use in a method according to one of Claims 1 to 13.

15. Computer program or computer program product which is directly loadable into the internal memory of a computer, or a computer program product stored on a computer-readable medium, or a combination of such computer programs or computer program products, configured for use in a method according to one of Claims 1 to 13.
